# FASCICULE DE BREVET EUROPEEN

(11) **EP 0 849 899 B1**
(45) Date de publication et mention de la délivrance du brevet: **27.09.2000**
(21) Numéro de dépôt: 97403078.5
(22) Date de dépôt: 18.12.1997
(51) Int. Cl.: H04B 10/18

(54) **Système de transmission à fibre optique en régime de dispersion normal**
Faseroptisches Übertragungssystem mit normalem Dispersionsmodus
Optical fibre transmission system in normal dispersion mode

(30) Priorité: 19.12.1996 FR 9615638
(43) Date de publication de la demande: 24.06.1998
(73) Titulaire: ALCATEL, 75008 Paris (FR)
(72) Inventeur: Marcerou, Jean-François, 91100 Corbeil-Essonnes (FR)
(74) Mandataire: Lamoureux, Bernard

(56) Documents cités:
- EP-A- 0 576 208
- EP-A- 0 708 539
- EP-A- 0 730 354
- US-A- 5 574 590

## Description

La présente invention a pour objet un système de transmission optique à fibre optique, ainsi qu'un procédé de transmission pour un tel système.

L'invention concerne le domaine des systèmes de transmission à fibre optique. Dans la suite de la présente description, on entend par "longue distance" ou "grande distance" les distance supérieures à 6 Mm, qui sont typiquement les longueurs utilisées pour des systèmes de transmission transocéaniques. On entend par "haut débit" ou "grand débit" des débits supérieurs à 5 Gbits/s, qui sont les débits actuellement envisagés pour des systèmes de transmission à grande distance. Pour des systèmes de transmission à fibre optique à grande distance et à haut débit se posent des problèmes de dispersion spécifiques.

Il a été proposé, comme pour des systèmes de transmission, d'utiliser pour la transmission des signaux NRZ (non retour à zéro) ou RZ (retour à zéro) à une longueur d'onde correspondant à un régime de dispersion normal de la fibre optique, i.e. un coefficient de dispersion négatif. Ce type de transmission, pour des hauts débits et de grandes distances, n'est pas envisageable avec les fibres optiques actuelles: en effet les pénalités dues à la dispersion sur des distances supérieures à quelques Mm sont trop importantes. Il reste possible de disposer des répéteurs à des intervalles faibles, par exemple de l'ordre de 65 km pour 6000 km de longueur totale de transmission, et surtout inférieurs à 45 km pour 8000 km de longueur totale de transmission, pour assurer la régénération des signaux. Cette solution est difficile à mettre en oeuvre pour des liaisons transocéaniques, dans lesquelles les répéteurs sont impossibles à changer ou à réparer. Elle n'est pas non plus viable économiquement pour de grandes distances.

Une autre solution consiste à utiliser des impulsions ou signaux de format soliton. La transmission d'impulsions solitons ou solitons dans la partie d'une fibre optique à dispersion anormale est un phénomène connu. Les solitons sont des signaux impulsionnels de forme sech". Avec cette forme d'impulsion, la non-linéarité dans la partie correspondante de la fibre compense la dispersion du signal optique. La transmission des solitons est modélisée de façon connue par l'équation de Schrödinger non-linéaire. La transmission de solitons dits "noirs", constitués par des trous impulsionnels dans un signal continu, dans la partie à dispersion normale d'une fibre optique est aussi connue; dans ce cas, les solitons présentant une longueur d'onde telle qu'ils se propagent avec une dispersion chromatique négative. Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons. Pour arriver à dépasser cette limite, il a été proposé des systèmes de filtres guidants glissants, permettant de contrôler la gigue des solitons transmis, voir par exemple EP-A-0 576 208. Il est précisé, dans ce document, que seuls les solitons peuvent être guidés par des filtres glissants, et que les autres types d'impulsions subissent du fait du filtrage glissant des pertes d'énergie catastrophiques.

La transmission d'impulsions solitons ou solitons dans la partie d'une fibre optique à dispersion anormale constitue la solution généralement reconnue actuellement pour des systèmes de transmission à fibre optique à haut débit et à grande distance. Cette solution présente toutefois des inconvénients, et en particulier, implique une distribution des temps d'arrivée des impulsions souvent fortement pénalisante. En outre, les impulsions solitons interagissent, ce qui limitent le débit utile en imposant une "distance" minimale entre deux solitons voisins, voir par exemple F. M. Mitschke et L. F. Mollenauer, Optical Letters, vol. 12 n° 5 pages 355-357.

Comme expliqué plus haut, il existe un préjugé dans l'état de la technique quant à la faisabilité d'une liaison à fibre optique à haut débit et à grande distance dans la partie de la fibre optique à dispersion normale.

L'invention propose une solution nouvelle et inattendue au problème de la dispersion dans les systèmes de transmission à haut débit et à grande distance, qui évite le recours à des impulsions solitons. L'invention propose une solution à l'encontre du préjugé général, et permet la transmission de signaux dans la partie de la fibre à dispersion normale.

Plus précisément, l'invention propose un système de transmission à fibre optique comprenant une pluralité de filtres de fréquences variant en fonction de la distance le long du système de transmission, dans la bande de fréquence correspondant au mode de dispersion normale de la fibre optique.

Dans un mode de réalisation, les dites fréquences croissent en fonction de la distance le long du système de transmission. Dans un autre mode de réalisation, les dites fréquences décroissent en fonction de la distance le long du système de transmission. Les fréquences peuvent aussi suivre une fonction non-monotone de la distance le long du système de transmission.

Le taux de variation de la fonction associant à la distance le long du système de transmission lesdites fréquences est de préférence compris en valeur absolue entre 6 et 120 GHz/Mm, et de préférence entre 16 et 60 GHz/Mm.

On peut aussi prévoir dans le système de transmission des tronçons de fibre optique à dispersion positive dans ladite bande de fréquence pour compenser la dispersion cumulée dans la partie normale de la fibre optique. Le système de transmission peut présenter une longueur supérieure à 6 Mm.

L'invention concerne aussi un procédé de transmission dans un tel système de transmission, comprenant l'émission de signaux NRZ ou RZ non solitons à des fréquences correspondant au mode de dispersion normale de la fibre.

Les signaux peuvent être émis avec un débit supérieur à 5 Gbits/s, et de préférence supérieur à 10 Gbits/s. Il s peuvent aussi être émis en multiplexage de longueur d'onde.

D'autres caractéristiques et avantages de l'invention apparaîtront à la lecture de la description qui suit de modes de réalisation de l'invention, donnés à titre d'exemple et en référence aux dessins annexés qui montrent:
- figure 1 un exemple de structure de système de transmission selon l'invention;
- figure 2 une représentation graphique du facteur de qualité Q en fonction de la distance z, dans un système de transmission selon l'invention;
- figures 3a à 3j, l'allure du diagramme de l'oeil et du diagramme temporel, pour différentes distances, dans le cas du signal de la figure 2.

L'invention propose d'utiliser des filtres glissants, dans la bande de fréquence correspondant au mode de dispersion normale de la fibre optique. De façon surprenante, il s'avère que l'utilisation de filtres glissants, auparavant suggérée pour compenser la gigue induite sur des solitons transmis dans la partie de dispersion anormale de la fibre peut être aussi utilisée pour assurer la transmission de signaux non solitons, en régime de dispersion normale. Il s'agit là d'une invention qui va à l'encontre des solutions classiquement suggérés à l'homme du métier pour assurer la transmission à longue distance et à haut débit, en dispersion normale.

L'utilisation de filtres glissants pour éviter la gigue sur des signaux solitons ne fournit aucune suggestion à l'homme du métier d'appliquer des filtres glissants, d'une part pour les signaux qui ne sont pas des solitons, d'autre part dans un régime de dispersion opposé à celui dans lequel les solitons se propagent, et enfin, pour régler un problème qui n'est pas le problème de la gigue et de l'effet Gordon-Haus. Il est fait de nouveau référence à EP-A-0 576 208, qui reflète la position générale de l'état de la technique sur l'utilisation des filtres glissants.

Il est possible d'utiliser des filtres glissants dont la fréquence centrale - typiquement la demi-somme des fréquence assurant un filtrage à -3 dB, ou une définition correspondante, varie en croissant ou décroissant continûment en fonction de la distance le long du système de transmission. Dans le cas de filtres multilobes, comme des filtres Fabry Perot, on considère la fréquence centrale d'un lobe, ou on travaille modulo l'intervalle spectral libre. La simulation numérique montre que dans un cas comme dans l'autre, des signaux NRZ ou RZ non solitons sont transmis de façon acceptable.

On peut aussi utiliser des filtres glissants dont la fréquence centrale varie de façon non-monotone en fonction de la distance le long du système de transmission, et typiquement, varie en "zigzag", i.e. en croissant et décroissant successivement.

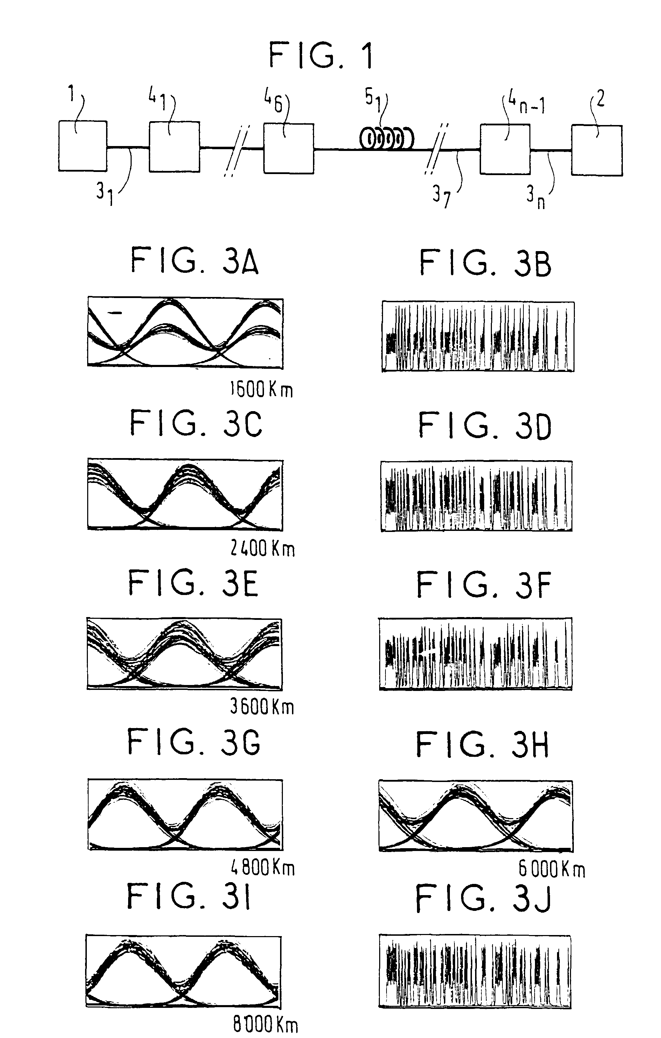

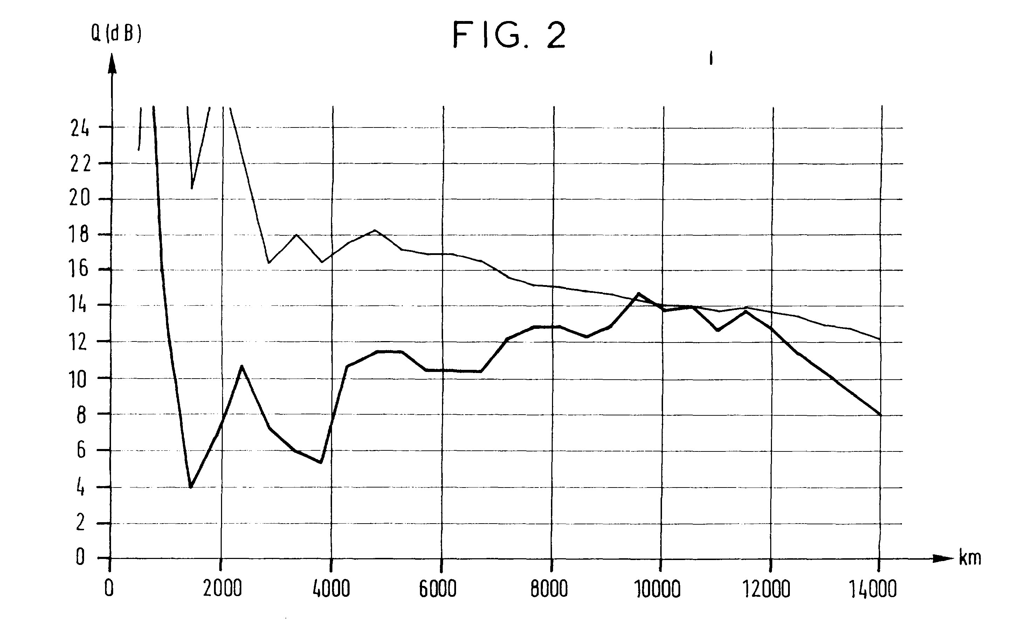

On peut, si nécessaire, intercaler dans le système de transmission des sections de fibre optique différentes, qui présentent pour les longueurs d'onde des signaux transmis, des dispersions positives. Un exemple de système de transmission mettant en oeuvre cette solution est décrit à la figure 1.

Dans tous les cas, le taux de glissement, ou le taux de variation des fréquences centrales en fonction de la distance, i.e. le rapport entre la différence des fréquences centrales de deux filtres voisins et la distance entre ces filtres présente de préférence une valeur absolue comprise entre 6 et 120 GHz/Mm; des valeurs entre 12 et 60 GHz/Mm sont encore plus préférables et assurent des résultats satisfaisants. L'exemple de la figure 1 correspond à un taux de variation constant de -24 GHz/Mm. Ces taux de variations sont suffisamment faibles pour assurer un décalage acceptable à travers l'ensemble du système, même pour de grandes distances et des taux de glissement monotones. Dans l'exemple de la figure 1, l'effet cumulé des filtres correspond à 2,2 nm sur une distance de 12 Mm, ce qui reste acceptable.

On peut utiliser des filtres de tout type, et notamment des filtres étalons de type Fabry Perot, qui sont adaptés et simple à mettre en oeuvre. D'autres types de filtres sont possibles. Les filtres de type Fabry Perot sont spécialement adaptés pour la transmission en multiplex de longueur d'onde, dans la mesure où leur fonction de transfert est multilobe.

On peut utiliser classiquement dans un système de transmission selon l'invention des dispositifs d'amplification, comme des fibres dopées aux terres rares, par exemple à l'Erbium, qui permettent d'amplifier les signaux et de compenser l'affaiblissement provoqué par la transmission et le filtrage.

Dans un système selon l'invention, on peut transmettre, à des débits supérieurs à 5 ou 10 Gbits/s, et sur des distances supérieures à quelques Mm, des signaux NRZ ou RZ non solitons. On peut utiliser du multiplexage de longueur d'onde (WDM) pour assurer le passage de plusieurs canaux de communication dans le système de transmission.

La figure 1 montre un exemple de structure de système de transmission selon l'invention, destiné à être utilisé pour la transmission de signaux impulsionnels détaillés en référence à la figure 2; dans l'exemple de la figure 1, le système comprend deux terminaux d'émission réception 1 et 2, reliés par des sections de fibre optique 31 à 3n, séparés par des répéteurs 41 à 4n-1; les sections de fibre optique sont constituées de fibre présentant une dispersion D = -0,2 ps/nm.km, et une longueur de section de 80 km.

Chacun des répéteurs 41 à 4n-1 comprend un filtre de type Fabry Perot, de largeur 0,48 nm, et d'ISL (intervalle spectral libre) de 0,77 nm; les filtres présentent une fréquence centrale qui varie continûment en diminuant le long du système de transmission, avec un taux de variation de -24 GHz/Mm. Chaque filtre est en outre associé à un amplificateur à +6 dB. Tous les 480 km, i.e. après six sections de fibre à D = - 0,2 ps/nm.km, on intercale dans le système un tronçon de fibre optique 51 à 5p présentant une dispersion positive D = 17 ps/nm.km; ces tronçons permettent de compenser l'effet cumulé des sections de fibre à dispersion négative. Chaque tronçon présente une longueur de l'ordre de 5,6 km, qui est suffisante pour ramener à zéro la dispersion sur l'ensemble des six sections de 80 km et du tronçon de fibre à dispersion positive. Le système décrit sur cette figure 1 fonctionne également si l'on remplace la fibre dont la dispersion est - 0,2 ps/nm.km par de la fibre à dispersion de - 0,01 ps/nm.km, que l'on ne compense pas en ligne. Il est alors clair qu'aucun tronçon de fibre à dispersion positive n'étant présent, il ne s'agit pas d'un régime soliton.

La figure 2 montre une représentation graphique du facteur de qualité Q en fonction de la distance z, pour le système de transmission de la figure 1. On a utilisé pour la simulation numérique de la figure 2 un train d'impulsions super-gaussiennes, de temps de montée de 40 ps, et de largeur de 60 ps, classiquement pour une énergie égale à la moitié de l'énergie maximale (FWHM). Les impulsions sont émises à un débit de 10 Gbits/s.

On a porté sur la figure 2 en abscisse la distance de propagation en Mm, et en ordonnées le facteur de qualité, en dB. La courbe formée par les carrés représente le facteur de qualité en amplitude Qa, et la courbe formée par les triangles le facteur de qualité temporel Qt, tels que calculés numériquement. Ces deux facteurs présentent une valeur supérieure à 10 dB pour des distances de propagation de supérieures à 6 Mm, et assurent un BER largement inférieur à 10-20 pour de telles distances.

La figure 2 illustre bien la faisabilité technique selon l'invention d'une transmission à haut débit et à grande distance, dans la partie de la fibre optique à dispersion normale, avec des signaux RZ non solitons. Elle confirme que la transmission de tels signaux, à l'aide de filtres glissants, permet d'assurer des liaisons correctes, sans nécessiter pour autant de répéteurs très proches.

Sont représentés sur les figures 3a à 3j, l'allure du diagramme de l'oeil et du diagramme temporel, pour différentes distances, dans le cas de la simulation de la figure 2. Les figure 3a, 3c, 3e, 3g, 3i et 3j montrent le diagramme de l'oeil pour des distances respectives de 1600, 2400, 3600, 4800, 6000 et 8000 km.

Les figures 3b, 3d, 3f montrent le diagramme temporel correspondant, pour des distances respectives de 1600, 2400, 3600 et 8000 km.

L'ouverture des différents diagrammes de l'oeil montre la qualité de la transmission du signal selon l'invention, pour de grandes distances. L'allure des diagrammes temporels correspondant confirme encore la faisabilité de la transmission selon l'invention: au delà de 8 Mm, le diagramme de l'oeil est bien ouvert, ce qui correspond aux valeurs acceptables des facteurs de qualité temporel et en amplitude.

Bien entendu, la présente invention n'est pas limitée aux exemples et modes de réalisation décrits et représentés, mais elle est susceptible de nombreuses variantes accessibles à l'homme de l'art. Il est clair que la définition classique de la fréquence centrale d'un filtre - la demi-somme de la fréquence assurant un filtrage à -3 dB - peut être généralisée, même si la fonction de transfert du filtre ne présente pas de point assurant un filtrage à -3 dB: il suffit d'augmenter de façon arbitraire la puissance jusqu'à ce qu'il existe effectivement de tels points. L'utilisation des termes fréquence centrale n'est pas exclusive de filtres multilobes, comme expliqué plus haut. Il est encore clair que l'on peut choisir différents modes de variation des fréquences centrales des filtres. Le système de transmission a été décrit en référence à la figure 2 dans le cas d'une transmission unidirectionnelle; il peut aussi être utilisé en transmission bidirectionnelle.

## Revendications

1. Un système de transmission à fibre optique comprenant une pluralité de filtres de fréquences variant en fonction de la distance le long du système de transmission, caractérisé en ce que la variation des fréquences des filtres a lieu dans la bande de fréquence correspondant au mode de dispersion normale de la fibre optique.

2. Un système de transmission selon la revendication 1, dans lequel les dites fréquences croissent en fonction de la distance le long du système de transmission.

3. Un système de transmission selon la revendication 1, dans lequel les dites fréquences décroissent en fonction de la distance le long du système de transmission.

4. Un système de transmission selon la revendication 1, dans lequel les dites fréquences suivent une fonction non-monotone de la distance le long du système de transmission.

5. Un système de transmission selon l'une des revendications 1 à 4, dans lequel le taux de variation de la fonction associant à la distance le long du système de transmission lesdites fréquences est compris en valeur absolue entre 6 et 120 GHz/Mm, et de préférence entre 16 et 60 GHz/Mm.

6. Un système de transmission selon l'une des revendications 1 à 3 ou 5, comprenant en outre des tronçons de fibre optique à dispersion positive dans ladite bande de fréquence pour compenser la dispersion cumulée dans la partie normale de la fibre optique.

7. Un système de transmission selon l'une des revendications 1 à 6, d'une longueur supérieure à 6 Mm.

8. Procédé de transmission dans un système de transmission selon l'une des revendications 1 à 7, comprenant l'émission de signaux NRZ ou RZ non solitons à des fréquences correspondant au mode de dispersion normale de la fibre.

9. Procédé selon la revendication 8, dans lequel les signaux sont émis avec un débit supérieur à 5 Gbits/s, et de préférence supérieur à 10 Gbits/s.

10. Procédé selon la revendication 8 ou 9, dans lequel les signaux sont émis en multiplexage de longueur d'onde.

## Claims

1. A fiber optic transmission system including a plurality of filters with a frequency varying as a function of the distance along THE transmission system, characterized in that the filter frequencies are varied in the frequency band corresponding to the normal dispersion mode of the optical fiber.

2. A transmission system according to claim 1 wherein said frequencies increase as a function of the distance along the transmission system.

3. A transmission system according to claim 1 wherein said frequencies decrease as a function of the distance along the transmission system.

4. A transmission system according to claim 1 wherein said frequencies are a non-monotonous function of the distance along the transmission system.

5. A transmission system according to any one of claims 1 to 4 wherein the rate of variation of the function associating said frequencies with the distance along said transmission system has an absolute value in the range 6 GHz/1 000 km to 120GHz/1 000km and preferably in the range 16GHz/1 000km to 60 GHz/1 000 km.

6. A transmission system according to any one of claims 1 to 3 or 5 further including optical fiber sections with positive dispersion in said frequency band to compensate the cumulative dispersion in the normal part of the optical fiber.

7. A transmission system according to any one of claims 1 to 6 having a length exceeding 6 000 km.

8. A transmission method in a transmission system according to any one of claims 1 to 7 entailing the transmission of non-soliton RZ or NRZ signals at frequencies corresponding to the normal dispersion mode of the fiber.

9. A method according to claim 8 wherein said signals are transmitted at a bit rate greater than 5 Gbit/s and preferably greater than 10 Gbit/s.

10. A method according to claim 8 or claim 9 wherein the signals are transmitted in wavelength division multiplexed form.

## Patentansprüche

1. Übertragungssystem mit optischer Faser, das eine Vielzahl von Filtern mit Frequenzen aufweist, die sich in Abhängigkeit von der Entfernung entlang des Übertragungssystems ändern, dadurch gekennzeichnet, daß die Änderung der Frequenzen der Filter in dem Frequenzband vorkommen, das dem normalen Dispersionsmodus der optischen Faser entspricht.

2. Übertragungssystem nach Anspruch 1, bei welchem die genannten Frequenzen in Abhängigkeit von der Entfernung entlang des Übertragungssystems zunehmen.

3. Übertragungssystem nach Anspruch 1, bei welchem die genannten Frequenzen in Abhängigkeit von der Entfernung entlang des Übertragungssystems abnehmen.

4. Übertragungssystem nach Anspruch 1, bei welchem die genannten Frequenzen einer nichtmonotonen Funktion der Entfernung entlang des Übertragungssystems folgen.

5. Übertragungssystem nach einem der Ansprüche 1 bis 4, bei welchem der Absolutwert des Änderungsfaktors der Funktion, die der Entfernung entlang des Übertragungssystems die Frequenzen zuordnet, zwischen 6 und 120 GHz/Mm und vorzugsweise zwischen 16 und 60 GHz/Mm liegt.

6. Übertragungssystem nach einem der Ansprüche 1 bis 3 oder 5, das außerdem Stücke einer optischen Faser mit positiver Dispersion im genannten Frequenzband umfaßt, um die im normalen Teil der optischen Faser kumulierte Dispersion zu kompensieren.

7. Übertragungssystem nach einem der Ansprüche 1 bis 6 mit einer Länge von mehr als 6 Mm.

8. Verfahren zur Übertragung in einem Übertragungssystem nach einem der Ansprüche 1 bis 7, das das Aussenden von NRZ- oder RZ-Signalen, die nicht Solitonen sind, bei Frequenzen umfaßt, die dem normalen Dispersionsmodus der Faser entsprechen.

9. Verfahren nach Anspruch 8, bei welchem die Signale mit einer Datenrate von mehr als 5 Gbit/s und vorzugsweise von mehr als 10 Gbit/s ausgesendet werden.

10. Verfahren nach Anspruch 8 oder 9, bei welchem die Signale in Wellenlängenmultiplexierung ausgesendet werden.
